# EUROPÄISCHE PATENTSCHRIFT

(11) **EP 3 363 573 B1**
(45) Veröffentlichungstag und Bekanntmachung des Hinweises auf die Patenterteilung: **03.07.2019**
(21) Anmeldenummer: 17206597.1
(22) Anmeldetag: 12.12.2017
(51) Int. Cl.: B23F 23/00, F16F 15/36, G01M 1/36

(54) **VORRICHTUNG UND VERFAHREN ZUR WERKSTÜCKBEARBEITUNG AUF EINER VERZAHNMASCHINE**
DEVICE AND METHOD FOR THE PROCESSING OF A WORK PIECE ON A GEAR CUTTING MACHINE
DISPOSITIF ET PROCÉDÉ D'USINAGE DE PIÈCES D'USINAGE SUR UNE MACHINE À TAILLER

(30) Priorität: 21.02.2017 DE 102017001652
(43) Veröffentlichungstag der Anmeldung: 22.08.2018
(73) Patentinhaber: Liebherr-Verzahntechnik GmbH, 87437 Kempten (DE)
(72) Erfinder: Glaser, Franz, 87435 Kempten (DE)
(74) Vertreter: Laufhütte, Dieter

(56) Entgegenhaltungen:
- EP-A1- 2 186 590
- DE-A1- 19 711 726
- DE-A1-102008 030 925
- DE-A1-102012 015 846
- DE-A1-102012 018 358
- DE-A1-102013 220 400

## Beschreibung

Die Erfindung betrifft eine Vorrichtung zum Einsatz in einer Verzahnmaschine nach dem Oberbegriff des Anspruchs 1, sowie ein Verfahren zum Auswuchten der Vorrichtung.

Eine derartige Vorrichtung geht beispielsweise aus der DE 10 2012 018358 A1 hervor.

Stetig wachsende Leistungsanforderungen an die Getriebeverzahnungen erfordern eine stetige Verbesserung der Zahnradqualität. Diese Qualitätsverbesserung soll einhergehen mit einer Reduktion der Herstellkosten. Moderne Schneidstoffe und der Wunsch nach immer kürzeren Bearbeitungszeiten bei verzahnten Werkstücken führen zu höheren Spindeldrehzahlen am Werkstück und am Werkzeug. Die höheren Spindeldrehzahlen können insbesondere durch den Einsatz von Direktantrieben realisiert werden. Dadurch lassen sich auch die Abtragleistungen deutlich steigern. Allerdings wachsen dadurch wiederum die Anforderungen an die Maschinen und deren statischen und dynamischen Eigenschaften.

Insbesondere bei wälzgekoppelten Verzahnverfahren, bei denen die Werkzeugform durch den Herstellprozess auf das Werkstück abgebildet wird, werden hohe Anforderungen an die Synchronisation der Drehantriebe für Werkzeug und Werkstück, sowie an die Achsantriebe für die Linearachsen, die am Verzahnprozess beteiligt sind, gestellt. Fehler bei den Achsbewegungen und vor allem in der Wälzkopplung machen sich sofort als Verzahnungs- und/oder Oberflächenfehler am Werkstück bemerkbar.

Werkzeugmaschinen, vorzugsweise Schleifmaschinen, mit schnell laufender Werkzeugspindel, die gleichzeitig hohe Oberflächengüten erzeugen sollen, zeigen öfter als andere Maschinen dynamische Probleme, welche zum Überschreiten der geforderten Oberflächenrauhigkeits- und Formhaltigkeitsqualität der bearbeiteten Werkstücke führen können. Diese dynamischen Probleme entstehen durch die Eigenformen und Eigenfrequenzen, die durch die Werkzeugspindel angeregt werden. Ein Auszuwuchten der Werkzeugspindeln verbessert üblicherweise das Grundproblem.

Bei Werkzeugmaschinen mit abrichtbaren Werkzeugen kann sich zusätzlich mit jedem Abrichtzyklus die Wuchtgüte des Werkzeuges durch Einflüsse aus dem Abrichtprozess, aufgrund Geometrieveränderungen oder aufgrund unterschiedlicher Kühlmittelaufnahme ändern.

Daher werden diese Maschinen in aller Regel mit einem integrierten Wuchtsystem zum Auswuchten der Werkzeugspindel mit dem aufgespannten Werkzeug versehen, um Schwingungsanregungen durch das Werkzeug in der Maschine zu unterdrücken und so das Bearbeitungsergebnis zu verbessern. Bei Schleifmaschinen mit breiten Werkzeugen, insbesondere Verzahnungsschleifmaschinen mit breiten Schleifschnecken, werden häufig Mehrebenenwuchtsysteme, eingesetzt um das Werkzeug über seiner gesamten Breite auszuwuchten.

Mehrebenenwuchtsysteme zum Auswuchten von Werkzeugspindel sind in verschiedenen Veröffentlichungen beschrieben worden. So beschreibt die EP 1 870 198 A beispielsweise ein Mehrebenenwuchtsystem zum Auswuchten eines Schleifwerkzeuges bei dem mittels kleiner Stellmotoren, die innerhalb eines Wuchtkopfes in der Werkzeugspindel angeordnet sind, Wuchtgewichte radial verschoben werden und so die Wuchtgüte des Gesamtsystems aus Werkzeug und Werkzeugspindel verbessern. Angesteuert werden die Stellmotoren über eine Steuerung, die Signale einer nicht dargestellten Schwingungsmesseinrichtung (Beschleunigungssensoren) in Ansteuersignale für die Motoren umrechnet, um so die Schwingungsanregung durch das Werkzeug zu minimieren.

Bei den aktuellen Schleifprozessen unterscheiden sich die Drehzahlen zwischen Werkzeug und Werkstück deutlich (- bei der Zahnradbearbeitung z.B. entsprechend dem Übersetzungsverhältnis zwischen Werkzeug und Werkstück). Von daher wird es bisher als ausreichend angesehen, wenn nur die Werkzeugspindel ausgewuchtet wird, da diese meist mit deutlich höheren Drehzahlen betrieben wird und dadurch für dynamische Anregungen, die zu Eigenanregung der Spindel führen können, besonders empfindlich ist.

Die Anforderung an immer kürzere Bearbeitungszeiten für die Verzahnungen führen verstärkt dazu, dass mehrgängige Werkzeuge eingesetzt werden. Gleichzeitig steigen die Anforderungen an die Bearbeitungsgenauigkeit bei den Verzahnungen. Dies führt zunächst dazu, dass bei gleicher Werkzeugdrehzahl - bedingt durch die Wälzkopplung - die Werkstückdrehzahl im Verhältnis zu der Gangzahl angepasst werden muss. Hierdurch erhöhen sich die erforderlichen Tischdrehzahlen auch deutlich. Gleichzeitig führt dies dazu, dass nun auch dynamische Probleme an der Tischspindel stärker in den Vordergrund treten können und sich das Bearbeitungsergebnis insgesamt verschlechtert.

Die Aufgabe der vorliegenden Erfindung ist es daher, eine Vorrichtung der eingangs genannten Art so zu verbessern, dass beim Einsatz mehrgängiger Bearbeitungswerkzeuge bei hohen Spindeldrehzahlen an Werkzeug und Werkstück das Bearbeitungsergebnis der damit bearbeiteten Werkstücke den geforderten Qualitätsanforderungen genügt. Die Vorrichtung soll dabei in Form einer Verzahnmaschine vorzugsweise zur Bearbeitung von evolventischen Stirnverzahnungen oder aber Profilen mit einer wiederkehrenden Struktur eingesetzt werden, die mit einem wälzgekoppelten Verfahren bearbeitet werden können. Als Werkzeuge sollen vorzugsweise abrichtbare Werkzeuge zum Einsatz kommen. Diese Aufgabe wird durch eine Vorrichtung mit den Merkmalen des Anspruchs 1 gelöst sowie mit einem Verfahren nach Anspruch 4, sowie einer Verzahnmaschine nach Anspruch 11. Weitere vorteilhafte Ausführungsformen sind Gegenstand der abhängigen Ansprüche.

Die vorliegende Erfindung umfasst eine Vorrichtung bestehend aus mindestens einem Maschinentisch zur Aufnahme einer Spannvorrichtung für ein Werkstück und wenigstens einer Werkzeugspindel zur Aufnahme eines Werkzeuges zur Herstellung oder Bearbeitung einer Verzahnung. Die Bearbeitung erfolgt dabei nach dem wälzgekoppelten Verzahnverfahren, d. h. die Qualität der Wälzkopplung ist mitentscheidend für die Qualität der erzeugten Verzahnung. Dies bedeutet, dass sich Fehler im Gleichlauf bei einer der beiden Spindeln, beispielsweise Schwingungen an der Werkzeugspindel, zunächst einmal auf dem Werkstück abbilden. Das kann dann aber auch dazu führen, dass die andere Spindel, d.h. die Werkstückspindel, die auch als Tischspindel bezeichnet wird, ebenfalls zu Schwingungen angeregt wird. Dies wiederum kann zu weiterer gegenseitiger Verstärkung der Anregung führen, welche sich dann insgesamt negativ auf die Verzahnqualität auswirkt.

Im Stand der Technik war es bekannt, nur die höherdynamische Werkzeugspindel auszuwuchten. Mehrgängige Werkzeuge, vor allem solche mit hoher Gangzahl, führen nun dazu, dass auch die Werkstückspindeln mit hoher Drehzahl entsprechend dem Übersetzungsverhältnis zwischen Werkzeug und Werkstück betrieben werden müssen. Die Lösung der Erfindung besteht nun darin, auch die werkstückseitige Spindel mit einem Wuchtsystem auszustatten, um die dynamischen Anregungen bei dieser Spindel zu reduzieren. Dies vor allem deshalb, damit sich die Werkzeug- und Werkstückspindel nicht durch die Wälzkopplung gegenseitig zu Schwingungen anregen und so das Bearbeitungsergebnis negativ beeinflussen. Dazu können von der Maschinesteuerung die Einstellungen der Wuchtköpfe zunächst minimiert, dann aber auch aufeinander abgestimmt werden.

Je nach Ausführungsform ist die Wuchteinheit in die Tischspindel, die Tischplatte oder aber auch in die Spannvorrichtung integriert, wobei die jeweilige Anordnung entsprechend dem vorhandenen Bauraum gewählt werden kann. Als Einbauort werden die Tischplatte oder die Vorrichtung besonders dann gewählt, wenn bereits vorhandene Maschinen mit der Vorrichtung nachgerüstet werden sollen, ohne die gesamte Tischspindel austauschen zu müssen.

Entsprechend der Ausführung des Wuchtsystems muss jeder der Spindeln wenigstens ein Beschleunigungssensor zugeordnet werden, damit die Maschinensteuerung in der Lage ist, die entsprechend aufgenommenen Messsignale einer Spindel zuzuordnen. Auch die entsprechenden Korrektursignale für die Wuchteinrichtungen sind an die richtige Spindel und an die richtige Auswuchteinheit zu senden. Schließlich ist deren Wirkung zu überprüfen.

Bei Mehr-Ebenen-Wuchtsystemen werden häufig wenigstens zwei Beschleunigungsaufnehmer je Spindel verbaut, um die verschiedenen Unwucht-Komponenten zu erfassen. Werden an der Tischspindel zusätzlich noch weitere Sensoren mit unterschiedlicher Ausrichtung auf die Spindel hin angebaut, so können sowohl die radialen als auch die tangentialen Komponenten der Wirkungsrichtung separat betrachtet werden und ggf. gezielt beeinflusst werden.

In der einfachsten Ausführungsform wird bei beiden Spindeln die Wuchtgüte jeweils separat und unabhängig voneinander optimiert und minimiert. Abhängig vom Übersetzungsverhältnis können für die Spindeln aber auch unterschiedlichen Wuchtgütestufen vorgegeben werden, damit die Zeitdauer zum Auswuchten der beiden Spindeln reduziert werden kann. Bei Maschinen mit mehr als einer Werkstück- oder Werkzeugspindel werden jeweils die Spindeln aufeinander abgestimmt, die bei der folgenden Bearbeitung wälzgekoppelt miteinander das aktuelle Werkstück bearbeiten. Wenn wenigstens zwei Werkzeugspindeln in der Maschine vorgesehen sind, kann dabei eine Spindel zur Aufnahme des Abrichtwerkzeuges vorsehbar sein.

In einer Ausführungsform des Verfahrens werden die Werkzeugspindeln jeweils unter Berücksichtigung der anderen Spindel, in ihrer Wuchtgüte optimiert, wobei sich das Werkzeug und das Werkstück zunächst nicht im Eingriff miteinander befinden. In dieser Ausführungsform des Verfahrens wird dabei die Wälzkopplung elektronisch berücksichtigt, eine gegenseitige mechanische Beeinflussung der Spindeln untereinander findet dabei aber nicht statt.

In einer weiteren Ausführungsform des Verfahrens werden die Werkzeugspindeln jeweils unter Berücksichtigung der anderen Spindel, in ihrer Wuchtgüte optimiert, wobei sich das Werkzeug und das Werkstück zunächst nicht im Eingriff miteinander befinden. In einem zweiten Schritt werden das Werkzeug und das Werkstück miteinander in Eingriff gebracht und anschließend wird die Wuchtqualität dieses gekoppelten Systems überprüft. Falls erforderlich werden eine oder beide Spindeln unter Berücksichtigung der wechselseitigen mechanischen Beeinflussung nachgewuchtet.

In einer weiteren Ausführungsform des Verfahrens sind die Beschleunigungssensoren, die zur Messung der Schwinggeschwindigkeit in Abhängigkeit des Phasenwinkels dienen und aus deren Messergebnis jeweils die Korrekturfaktoren für das Spindelwuchtsystem berechnet werden, einer Spindel zugeordnet. Dabei ist das Messsystem entweder an der Spindel montiert, die auch mit dem zugehörigen Wuchtsystem ausgerüstet ist oder aber das Messsystem ist auf der jeweils anderen Spindel angeordnet wodurch die Optimierung unter Berücksichtigung der wechselseitigen Beeinflussung ausführbar ist.

Bei einer weiteren Ausführungsform des Verfahrens wird zunächst eine der beiden Spindeln in ihrer Wuchtgüte optimiert und anschließend dazu die jeweils andere Spindel in Abhängigkeit von der ersten Spindel unter Berücksichtigung der Phasengröße und Phasenlage der Schwingen eingestellt. Durch diese Optimierung kann das Gesamtsystem so eingestellt werden, dass sich die verbleibenden Restschwingungen der Spindelsysteme ergänzen oder aufheben. Durch die gezielte Erzeugung von Schwebungen oder Auslöschungen zwischen den Spindelschwingungen sind mit dieser Optimierung auch gezielt bestimmte Oberflächeneigenschaften auf den so bearbeiteten Zahnflanken erzeugbar.

In einem weiteren Verfahren werden mit unterschiedlich radial angeordneten Beschleunigungssensoren sowohl die radiale als auch die tangentiale Komponente der Wirkungsrichtung der Schwingungen ausgewertet, wobei hierbei insbesondere Beschleunigungssensoren an der Werkstückspindel auswertbar sind, wobei die Ergebnisse aus diesen Messungen von der Steuerung gezielt in Ansteuersignale umrechenbar sind, die zu Schwingungen, vorzugsweise des Werkstücks, in radialer, tangentialer oder einer anderen Richtung führen. Hierdurch sind gezielt bestimmte Oberflächeneigenschaften der so bearbeiteten Zahnflanken erzeugbar.

Die Erfindung betrifft weiterhin eine Verzahnmaschine mit einer Vorrichtung und einem Steuerungsprogramm zur Durchführung des erfindungsgemäßen Verfahrens. Weitere Merkmale, Vorteile und Eigenschaften der Erfindung werden im Folgenden anhand eines in der Zeichnung dargestellten Ausführungsbeispiels näher erläutert. Es zeigen:
- Fig. 1:: den Aufbau einer Verzahnungsschleifmaschine nach dem Stand der Technik in schematischer Darstellung mit ihren Maschinenachsen und
- Fig. 2:: eine Schnittansicht durch eine Ausführungsform des Abrichtwerkzeugs, wie es in einer Verzahnungsschleifmaschine nach Fig. 1 einsetzbar ist.

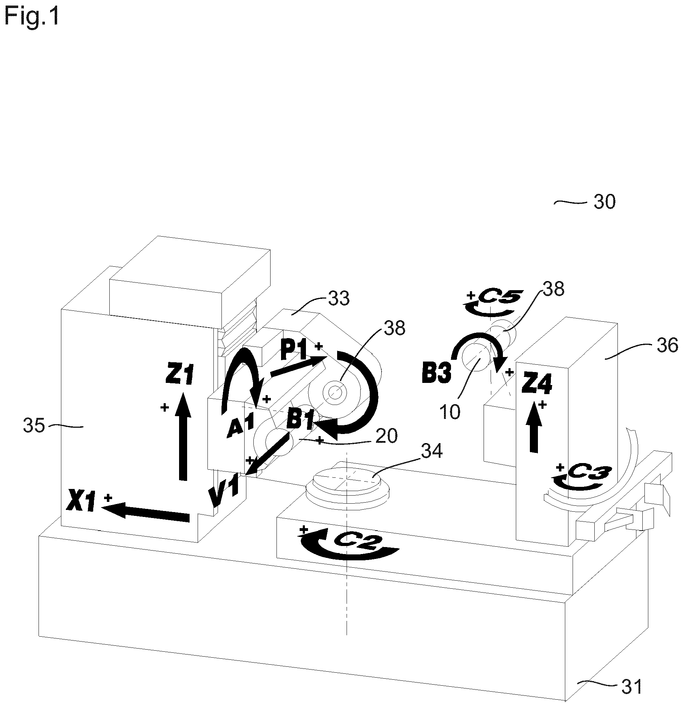

Anhand der schematischen Darstellung **Figur 1** wird der Aufbau einer Verzahnmaschine 30, in diesem Fall einer Verzahnungsschleifmaschine, erklärt. Sie kann für den Einsatz des erfindungsgemäßen Verfahrens genutzt werden. Auf einem Maschinenbett 31 sind die Baugruppen Maschinenständer 35, Gegenständer 36 und Maschinentisch 34 angeordnet. Der Maschinenständer 35 kann sich entlang der X1 Richtung in Richtung auf den Maschinentisch 34 linear bewegen. Am Maschineständer 35 ist ein Bearbeitungskopf 33 mit den Freiheitsgraden A1, V1 und Z1 montiert. Über die V1-Achse kann das Werkzeug relativ zum Werkstück vershiftet werden. Eine Schwenkbewegung erfolgt über die A1-Achse. Die Z1- Achse dient dazu, den Bearbeitungskopf 33 mit dem in der B1-Achse aufgenommen Schleifwerkzeug 20 parallel zur Werkstückachse (C2) während der Werkstückbearbeitung zu bewegen.

Über Maschinenbewegungen entlang der X1 und Z1-Achse kann - in diesem Ausführungsbeispiel - das Werkzeug 20 zum Abrichtwerkzeug 10 hinbewegt werden, damit dann dort der Abrichtvorgang stattfinden kann. Das Abrichtwerkzeug 10 ist dabei im Abrichter 38 aufgenommen und dreht sich während des Abrichtvorgangs um die Achse B3. Zu Korrekturbewegungen z.B. des Eingriffswinkels am Schleifwerkzeug kann der Abrichter 38 um die C5-Achse geschwenkt werden. Die Bewegung des Schleifwerkzeuges in V1-Richtung liefert die Relativbewegung zwischen Schleifschnecke 20 und Abrichtwerkzeug 10, wobei die Bewegungsgeschwindigkeit durch die Steigungshöhe der Schnecke, deren Gangzahl und die Schneckendrehzahl vorgegeben wird, die mit der Bewegung des Abrichtwerkzeuges 10 synchronisiert werden muss.

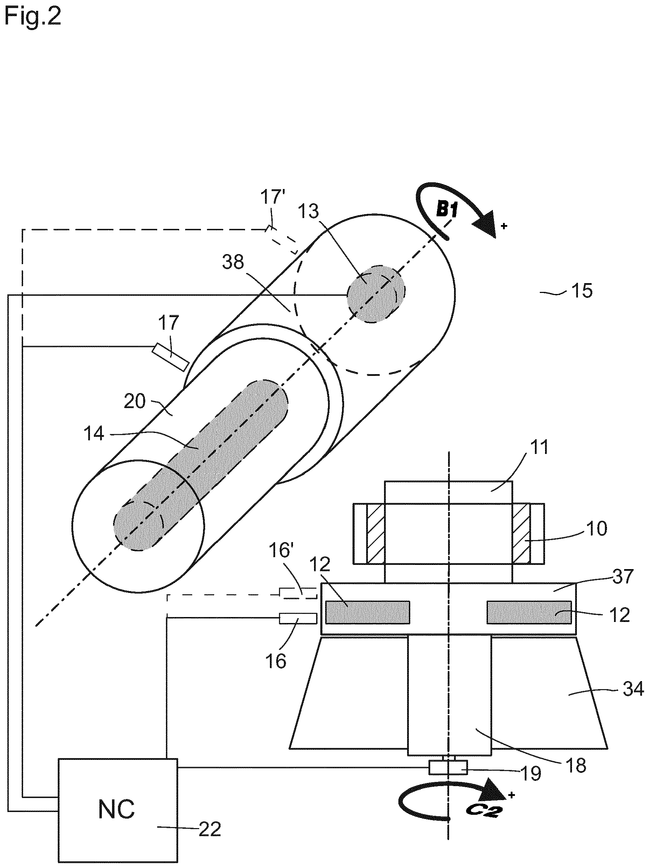

**Figur 2** zeigt schematisch eine beispielhafte Ausführung der erfindungsgemäßen Vorrichtung 15 zum Auswuchten der zwei Maschinenkomponenten Werkstückantrieb und Werkzeugantrieb mit mindesten je einem Wuchtsystem je Spindel Das Wuchtsystem kann dabei je einen Mehrebenenwuchtkopf aufweisen. Dargestellt ist am Maschinentisch 34 ein Wuchtsystem 12, welches in diesem Ausführungsbeispiel in der Tischplatte 37 zur Aufnahme der Werkstückspanneinrichtung 11 für das Werkstück 10 integriert ist. Dieses Wuchtsystem 12 kann, je nach dem vorhandenen Bauraum, aber auch in die Tischspindel 18 oder in die Werkstückaufnahme 11 integrierbar sein. Über einen oder mehrere Sensoren 16, 16' wird die Schwingung der Tischspindel 18 nach Größe und in Verbindung mit einem Drehgeber 19 auch deren Drehwinkellage (C2-Achse) aufgezeichnet. Die Messergebnisse werden an die Maschinensteuerung 22 weitergegeben, die daraus Korrekturwerte ermittelt.

Auf der Werkzeugseite ist das Wuchtsystem 14, vorzugsweise ebenfalls der Mehrebenenwuchtkopf, in die Werkzeugaufnahme 20 zur Aufnahme des nicht dargestellten Bearbeitungswerkzeuges integriert. Die Werkzeugaufnahme 20 wird über die Werkzeugspindel 38 angetrieben. Hier dienen ebenfalls einer oder mehrere Sensoren 17, 17' zur Aufzeichnung der Spindelschwingungen nach der Größe sowie der Drehwinkellage in Abhängigkeit von der Spindeldrehposition (B1-Achse) zur Aufzeichnung über einen Drehgeber 13. Die aufgezeichneten Werte werden dann an die Maschinensteuerung 22 zur Berechnung weitergegeben.

## Patentansprüche

1. Vorrichtung zum Einsatz in einer Verzahnmaschine zur wälzgekoppelten Herstellung oder Bearbeitung von Werkstücken mit mindestens einem Maschinentisch (34) der Vorrichtung, an welchem eine Werkstückspindel (18) zur Aufnahme einer Spannvorrichtung für ein Werkstück angeordnet ist, und mindestens einer Werkzeugspindel (38) der Vorrichtung zur Aufnahme eines Bearbeitungswerkzeuges, wobei die Werkzeugspindel mit einem integrierten Wuchtsystem (14) zum Auswuchten des Werkzeuges ausgestattet ist,
**dadurch gekennzeichnet, dass**
zusätzlich zum Wuchtsystem (14) in der Werkzeugspindel (38), beim Einsatz eines mehrgängigen Werkzeugs, ein weiteres unabhängiges Wuchtsystem (12) für die Werkstückspindel (18) vorgesehen ist, wobei das weitere Wuchtsystem am Maschinentisch (34) in die Werkstückspindel (18) oder die Tischplatte (37) oder die Werkstückspannvorrichtung (11) integriert ist.

2. Vorrichtung nach einem der Anspruch 1 , **dadurch gekennzeichnet, dass** die Wuchtsysteme (12,14) mit mindestens je einem Beschleunigungssensor (16,17) je Wuchtsystem und je Wuchtebene ausgeführt sind.

3. Vorrichtung nach einem der Ansprüche 1 oder 2, **dadurch gekennzeichnet, dass** die Wuchtsysteme (12,14) mit jeweils mindestens zwei Beschleunigungssensoren (16,16',17,17') je Wuchtsystem ausgeführt sind, wobei die Sensoren bezogen auf die Spindel radial und/oder axial beabstandet angeordnet sind und/oder wobei bei Vorhandensein mehrerer Sensoren je Spindel diese bezogen auf die Spindel radial unter unterschiedlichen Winkeln angeordnet sind und/oder zusätzlich unterschiedlich axial beabstandet sind.

4. Verfahren zum Auswuchten einer Vorrichtung nach einem der Ansprüche 1 bis 3, **dadurch gekennzeichnet, dass** die Werkzeugspindel mit dem weiteren Wuchtsystem (14) unabhängig von der Werkstückspindel mit dem weiteren Wuchtsystem (12) in ihrer Wuchtgüte optimiert wird, während sich das Werkzeug und das Werkstück nicht miteinander im Eingriff befinden

5. Verfahren nach Anspruch 4, **dadurch gekennzeichnet, dass** die Werkzeugspindel mit dem weiteren Wuchtsystem (14) synchronisiert mit der Werkstückspindel mit dem weiteren Wuchtsystem (12) in ihrer Wuchtgüte, unter Berücksichtigung der jeweils anderen Spindel optimiert wird, wobei sich das Werkzeug und das Werkstück nicht miteinander im Eingriff befinden.

6. Verfahren nach Anspruch 4 oder 5, **dadurch gekennzeichnet, dass** die Wuchtsysteme zunächst in einem ersten Schritt optimiert werden, ohne dass sich das Werkzeug und das Werkstück miteinander im Eingriff befinden, wobei in einem anschließenden zweiten Schritt die Wuchtqualität der Spindeln überprüft und gegebenenfalls nachjustiert wird, während sich das Werkzeug und das Werkstück im Eingriff befinden.

7. Verfahren nach Anspruch 5 oder 6, **dadurch gekennzeichnet, dass** die jeweils zur Spindel gehörenden Beschleunigungssensoren zur Einstellung der Wuchtköpfe ausgewertet werden und/oder dass die jeweils zur anderen Spindel gehörenden Beschleunigungssensoren zur Einstellung der Wuchtköpfe ausgewertet werden.

8. Verfahren nach einem der Ansprüche 4 bis 6 **dadurch gekennzeichnet, dass** zunächst die Werkzeug- oder die Werkstückspindel in ihrer Wuchtgüte optimiert wird und anschließend die andere Spindel in Abhängigkeit von der ersten Spindel unter Berücksichtigung der Phasengröße und Phasenlage eingestellt wird.

9. Verfahren nach Anspruch 8, **dadurch gekennzeichnet, dass** gezieltes Erzeugen von Schwingungsamplituden mit einer bestimmten Phasengröße und Phasenlage zu Schwebungen oder Auslöschungen von Schwingungen zwischen den zwei Spindeln führt, wodurch bestimmte Oberflächenmodifikationen auf der Flanke des mit diesem Verfahren bearbeiten Werkstück erzeugbar sind.

10. Verfahren nach Anspruch 9, **dadurch gekennzeichnet, dass** durch gezieltes Erzeugen von Schwingungen an der Werkstückspindel die Schwingungen vorzugsweise radial in Richtung auf das Werkzeug aufgeprägt werden und/oder vorzugsweise tangential zum Werkzeug aufgeprägt werden.

11. Verzahnmaschine mit einer Vorrichtung nach einem der Anspruche 1 bis 3 und einem Steuerungsprogramm zur Ausführung eines Verfahrens nach einem der Ansprüche 4 bis 10.

## Claims

1. An apparatus for use in a gear cutting machine for the gear-coupled manufacture or machining of workpieces having at least one machine table (34) of the apparatus at which a workpiece spindle (18) is arranged for holding a clamping apparatus for a workpiece, and having at least one tool spindle (38) of the apparatus for holding a machining tool, wherein the tool spindle is equipped with an integrated balancing system (14) for balancing the tool,
**characterized in that**
a further independent balancing system (12) for the workpiece spindle (18) is provided in addition to the balancing system (14) in the tool spindle (38) on the use of a multiple-thread tool, with the further balancing system at the machine table (34) being integrated in the workpiece spindle (18) or the table plate (37) or the workpiece clamping apparatus (11).

2. An apparatus in accordance with claim 1, **characterized in that** the balancing systems (12, 14) are designed with at least one respective acceleration sensor (16, 17) per balancing system and per balancing plane.

3. An apparatus in accordance with one of the claims 1 or 2, **characterized in that** the balancing systems (12, 14) are designed with a respective at least two acceleration sensors (16, 16', 17, 17') per balancing system, with the sensors being arranged radially and/or axially spaced apart with respect to the spindle and/or, on the presence of a plurality of sensors per spindle, being arranged radially at different angles with respect to the spindle and/or additionally being differently axially spaced apart.

4. A method of balancing an apparatus in accordance with one of the claims 1 to 3, **characterized in that** the balance quality of the tool spindle having the further balancing system (14) is optimized independently of the workpiece spindle having the balancing system (12), while the tool and the workpiece are not in engagement with one another.

5. A method in accordance with claim 4, **characterized in that** the balance quality of the tool spindle having the further balancing system (14) is optimized, synchronized with the workpiece spindle having the further balancing system (12), while taking account of the respective other spindle, with the tool and the workpiece not being in engagement with one another.

6. A method in accordance with claim 4 or claim 5, **characterized in that** the balancing systems are first optimized in a first step without the tool and the workpiece being in engagement with one another, with the balance quality of the spindles being checked and optionally readjusted in a subsequent second step, while the tool and the workpiece are in engagement.

7. A method in accordance with claim 5 or claim 6, **characterized in that** the respective acceleration sensors belonging to the spindle are evaluated for setting the balancing heads; and/or **in that** the respective acceleration sensors belonging to the other spindle are evaluated for setting the balancing heads.

8. A method in accordance with one of the claims 4 to 6, **characterized in that** first the balance quality of the tool spindle or of the workpiece spindle is optimized and the other spindle is subsequently set in dependence on the first spindle while taking account of the phase size and of the phasing.

9. A method in accordance with claim 8, **characterized in that** a direct generation of vibration amplitudes having a specific phase size and phasing produces beats or cancellations of vibrations between the two spindles, whereby specific surface modifications can be generated on the flank of the workpiece machined using this method.

10. A method in accordance with claim 9, **characterized in that** the vibrations are preferably imparted radially in the direction toward the tool and/or are preferably imparted tangentially to the tool by a direct generation of vibrations at the workpiece spindle.

11. A gear cutting machine having an apparatus in accordance with one of the claims 1 to 3 and having a control program for carrying out a method in accordance with one of the claims 4 to 10.

## Revendications

1. Dispositif destiné à être utilisé dans une machine à tailler les engrenages pour la fabrication ou l'usinage à engrènement de génération de pièces d'usinage avec au moins une table de machine-outil (34) du dispositif, sur laquelle une broche porte-pièce (18) est disposée pour recevoir un dispositif de serrage pour une pièce d'usinage, et au moins une broche porte-outil (38) du dispositif pour recevoir un outil d'usinage, la broche porte-outil étant équipée d'un système d'équilibrage (14) pour équilibrer l'outil,
**caractérisé en ce que**,
en plus du système d'équilibrage (14) dans la broche porte-outil (38), en cas d'utilisation d'un outil à filetage multiple, un autre système d'équilibrage (12) indépendant est prévu pour la broche porte-pièce (18), l'autre système d'équilibrage étant intégré dans la broche porte-pièce (18) ou le dessus de table (37) ou le dispositif de serrage de pièce (11) sur la table de machine-outil (34).

2. Dispositif selon la revendication 1, **caractérisé en ce que** les systèmes d'équilibrage (12, 14) sont réalisés avec au moins respectivement un capteur d'accélération (16, 17) par système d'équilibrage et par niveau d'équilibrage.

3. Dispositif selon l'une des revendications 1 ou 2, **caractérisé en ce que** les systèmes d'équilibrage (12, 14) sont réalisés avec respectivement au moins deux capteurs d'accélération (16, 16', 17, 17') par système d'équilibrage, les capteurs étant disposés espacés radialement et/ou axialement par rapport à la broche et/ou, en cas de présence de plusieurs capteurs par broche, ceux-ci étant disposés radialement selon des angles différents et/ou étant espacés en plus différemment dans le sens axial par rapport à la broche.

4. Procédé d'équilibrage d'un dispositif selon l'une des revendications 1 à 3, **caractérisé en ce que** la broche porte-outil avec l'autre système d'équilibrage (14) est optimisée en ce qui concerne sa qualité d'équilibrage indépendamment de la broche porte-pièce avec l'autre système d'équilibrage (12), pendant que l'outil et la pièce d'usinage ne sont pas en prise l'un avec l'autre.

5. Procédé selon la revendication 4, **caractérisé en ce que** la broche porte-outil avec l'autre système d'équilibrage (14) est optimisée en ce qui concerne sa qualité d'équilibrage de manière synchronisée avec la broche porte-pièce avec l'autre système d'équilibrage (12), en tenant compte de l'autre broche respective, l'outil et la pièce d'usinage n'étant pas en prise l'un avec l'autre.

6. Procédé selon la revendication 4 ou 5, **caractérisé en ce que** les systèmes d'équilibrage sont d'abord optimisés dans une première étape, sans que l'outil et la pièce ne soient engrenés l'un dans l'autre, la qualité d'équilibrage des broches étant vérifiée et le cas échéant réajustée dans une seconde étape subséquente, pendant que l'outil et la pièce d'usinage sont en prise.

7. Procédé selon la revendication 5 ou 6, **caractérisé en ce que** les capteurs d'accélération associés respectivement à la broche sont évalués pour le réglage des têtes d'équilibrage et/ou **en ce que** les capteurs d'accélération associés respectivement à l'autre broche sont évalués pour le réglage des têtes d'équilibrage.

8. Procédé selon l'une des revendications 4 à 6, **caractérisé en ce que** la broche porte-outil ou la broche porte-pièce est d'abord optimisée en ce qui concerne sa qualité d'équilibrage et l'autre broche est ensuite réglée en fonction de la première broche en tenant compte de la grandeur de phase et de la position de phase.

9. Procédé selon la revendication 8, **caractérisé en ce qu'**une génération ciblée d'amplitudes d'oscillation avec une grandeur de phase et une position de phase déterminées entraîne des battements ou des suppressions d'oscillations entre les deux broches, moyennant quoi des modifications de surface déterminées peuvent être générées sur le flanc de la pièce d'usinage usinée selon ce procédé.

10. Procédé selon la revendication 9, **caractérisé en ce que**, par la génération ciblée d'oscillations sur la broche porte-pièce, les oscillations sont transmises de préférence radialement en direction de l'outil et/ou de préférence de manière tangentielle par rapport à l'outil.

11. Machine à tailler les engrenages comprenant un dispositif selon l'une des revendications 1 à 3 et un programme de commande destiné à exécuter un procédé selon l'une des revendications 4 à 10.
